Europäisches Patentamt

(19) European Patent Office

Office européen des brevets

(11) Veröffentlichungsnummer: **0 307 610 B1**

# (12) EUROPÄISCHE PATENTSCHRIFT

(45) Veröffentlichungstag der Patentschrift :
08.05.91 Patentblatt 91/19

(51) Int. Cl.⁵ : **B65G 69/00**

(21) Anmeldenummer : 88112752.6

(22) Anmeldetag : 05.08.88

(54) **Verformbare Dichtung des Spaltes zwischen dem Rand einer Gebäudeöffnung und dem Heck eines an diese herangefahrenen Fahrzeuges.**

(30) Priorität : 10.09.87 DE 3730317

(43) Veröffentlichungstag der Anmeldung :
22.03.89 Patentblatt 89/12

(45) Bekanntmachung des Hinweises auf die
Patenterteilung :
08.05.91 Patentblatt 91/19

(84) Benannte Vertragsstaaten :
AT BE CH DE ES FR GB GR IT LI LU NL SE

(56) Entgegenhaltungen :
DE-A- 2 927 233
US-A- 3 403 489

(73) Patentinhaber : Alten, Kurt
Ringstrasse 14
W-3015 Wennigsen (DE)

(72) Erfinder : Alten, Kurt
Ringstrasse 14
W-3015 Wennigsen (DE)

(74) Vertreter : Depmeyer, Lothar
Auf der Höchte 30
W-3008 Garbsen 1 (DE)

## Beschreibung

Die Erfindung betrifft eine verformbare Dichtung nach dem Gattungsbegriff des 1. Schutzanspruchs.

Bei den bekannten Dichtungen dieser Art (DE-A-2 927 233) ist der Verschleißschutz an seinem oberen Rand zusammen mit dem Querteil am Steg befestigt. Diese Anordnung des Verschleißschutzes hat zur Folge, dass die einer besonderen mechanischen Beanspruchung durch die hinten oben gelegenen Kanten und Ränder der Fahrzeuge ausgesetzten Verschleiß schutzelemente nicht für sich ausgewechselt werden können. Bei Beschädigungen muss vielmehr das Querteil in seiner Gesamtheit demontiert und durch Entfernen der alten und Befestigen der neuen Verschleißschutzelemente werden. Zudem ist man bezüglich der Wahl der Wandstärken und der Werkstoffe begrenzt, weil am Querteil beliebige Elemente nicht befestigt werden können.

Der Erfindung liegt die Aufgabe zugrunde, die eingangs erwähnten verformbaren Dichtungen so zu verbessern, dass die Verschleißschutzelemente schnell erneuert werden können, ohne dazu auch das Querteil der Dichtung demontieren zu müssen. Darüber hinaus strebt die Erfindung eine Dichtung an, bei der für den Verschleißschutz beliebige Elemente benutzt werden können, ohne eine nachteilige Beeinflussung z.B. eine Faltenbildung des Querteils befürchten zu müssen.

Diese Aufgabe wird durch die Merkmale nach dem Kennzeichnungsteil des Anspruchs 1 gelöst. Vorteilhafte Ausgestaltungen der Erfindung ergeben sich aus den Unteransprüchen.

Demgemäss erfolgt eine vom Querteil unabhängige Anordnung und Lagerung der Verschleißschutzelemente, zudem wird zu deren Befestigung z.B. eine Schraubverbindung benutzt, die ein einfaches Auswechseln der Elemente gestattet.

Dabei ist es möglich, die lappenartigen, schürzenartigen Verschleißelemente lösbar mit einem Metallprofil zu verbinden, das wiederum lösbar mit dem erwähnten Steg in Verbindung steht. Schliesslich kann der obere Rand der Elemente auch unmittelbar lösbar mit dem Steg verbunden z.B. in eine hinterschnittene Nut des Steges lösbar eingefügt sein.

Weitere Einzelheiten der in den Ansprüchen definierten Erfindung werden anhand der Zeichnung erläutert, in der ein Ausführungsbeispiel der Erfindung dargestellt ist.

Es zeigen :

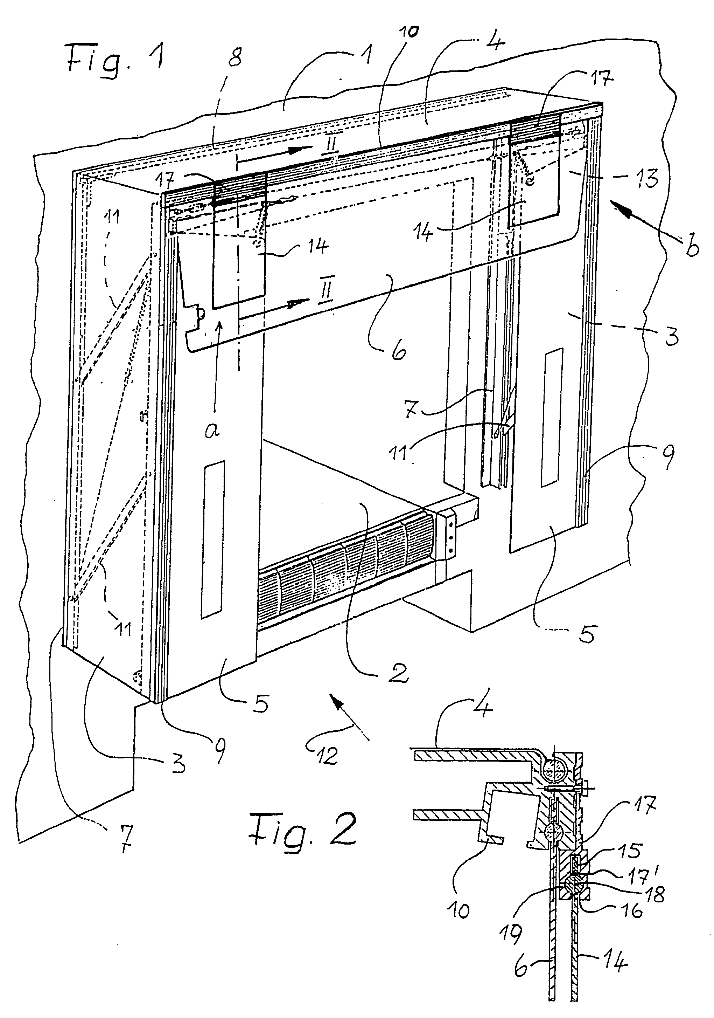

Fig. 1 eine Dichtung am Rand einer Gebäudeöffnung in schaubildlicher Darstellung und

Fig. 2 einen Schnitt nach der Linie II-II (unter Fortlassung des seitlichen Streifens der Dichtung).

Ein Gebäude 1 hat eine Öffnung 2, an die Fahrzeuge zum Be- und Entladen herangefahren werden können. Zu beiden Seiten der Öffnung 2 befindet sich eine senkrecht verlaufende Bespannung 3 und darüber in waagerechter Anordnung eine Querbespannung 4. Diese Bespannungen aus einem biegsamen, wasserdichten Stoff od. dgl. stellen vom Gebäude 1 her eine Verbindung zu einer Schürze mit einem senkrechten Streifen 5 zu beiden Seiten der Öffnung 2 und einem oben gelegenen Querteil 6. Auch die Teile 5 und 6 bestehen aus einem biegsamen Stoff, z.B. aus einer wasserdichten Folie od. dgl.

Die Öffnung 2 ist von einem u-förmigen Rahmen mit senkrechten Schenkeln 7 und einem oben liegenden Steg 8 umschlossen. Diese aus Metall bestehenden Teile sind fest mit dem Gebäude 1 verbunden. Sie dienen zur Befestigung der Ränder der Bespannung 3, 4. Die dem Gebäude abgekehrten Ränder der Bespannung 3, 4 stehen mit einem weiteren u-förmigen Rahmen in fester Verbindung. Seine senkrechten Schenkel sind mit 9, der Steg ist mit 10 bezeichnet. Zur Halterung und Führung des vorderen Rahmens (9, 10) dienen gegen Federkraft verschwenkbare Lenker 11.

Eine Verschwenkung der Lenker 11 kommt zustande, wenn ein Fahrzeug in Richtung des Pfeiles 12 an die Öffnung 2 herangefahren wird. Es berührt die Streifen 5 und das Querteil 6, wobei der Rahmen 9, 10 nachgeben kann, indem die Lenker 11 nach oben verschwenken, und zwar unter Verformung der Bespannung 3, 4. Es versteht sich, dass sich dabei die Streifen 5 und das Querteil 6 der Gestalt des Fahrzeuges anpassen und dabei die gewünschte Abdichtung herbeiführen.

Das Querteil 6 ist so angeordnet, dass es die oberen Enden 13 der Streifen 5 überdeckt, die nur an ihren seit-lich aussen gelegenen Rändern befestigt sind, und zwar an den Schenkeln 9. Das Querteil 6 ist indessen nur am Steg 10 befestigt.

Es versteht sich, dass durch das Heranfahren der Fahrzeuge an die Dichtung vorwiegend die Bereiche bei a und b, also die Endbereiche des Querteils 6 mechanisch beansprucht werden, weil dort die oberen Ecken des Fehrzeugaufbaus angreifen. Um dort einen Verschleißschutz zu bewirken, sind in den Bereichen a und b frei herabhängende Lappen 14 aus einem biegsamen, besonders abriebfesten Stoff, Folie od. dgl. vorgesehen. Diese Lappen 14 enden im Abstand vom unteren Rand des Querteils 6 und schliessen in etwa mit den einander zugekehrten Rändern mit den inneren Rändern der Streifen 5 ab.

Wichtig ist nun, dass – wie Fig. 2 zeigt – die Lappen 14 mit geringem Abstand vor dem Querteil 6 angeordnet und weiterhin mit dem oberen Rand lösbar mit dem Steg 10 verbunden sind. Demgemäss können die Lappen 14 schnell ausgewechselt werden, ohne dazu auch die übrigen Teile der Dichtung entfernen zu müssen.

Aus diesem Grund greift der obere Rand 15 der Lappen 14 in einen unten gelegenen Schlitz 16 eines Metallprofils 17 ein, das an die Stirnseite des Steges 10 angeschraubt ist. Der obere Rand 15 ist ferner mit mehreren Löchern 17' versehen zur Aufnahme von meist kugeligen Sperrkörpern 18, die in entsprechende Erweiterungen 19 des Schlitzes 16 eingreifen, um den Lappen 14 gegen Herausfallen zu sichern. Der Schlitz 16 mit der Erweiterung 19 – eine schmale Längsnut im Profil 17 bildend – hat den Vorteil, dass der Lappen 14 durch Herausziehen aus dem Schlitz 16 entfernt und durch Einfädeln wieder montiert werden kann. Eine Auswechselbarkeit ist also durch Entfernen des Metallprofils 17, aber auch durch Herausziehen des Lappens 14 möglich. Vorwiegend wird dabei die letztgenannte Möglichkeit genutzt.

Zur besseren Befestigung des Metallprofils 17 ist dessen Querschnitt der Aussenkontur des Steges 10 angepasst.

## Ansprüche

1. Verformbare Dichtung des Spaltes zwischen dem Rand einer Gebäudeöffnung (2) und dem Heck eines an diese herangefahrenen Fahrzeuges mit einer Schürze, die seitlich und oben an einem starren, im Abstand vom Gebäude befindlichen, unten offenen Rahmen befestigt ist, wobei die Schürze aus einem oberen, am waagerechten Steg (10) des Rahmens befestigten Querteil (6) und zwei mit ihren seitlich aussen gelegenen Rändern an den senkrechten Schenkeln des Rahmens befestigten Streifen (5) besteht und wobei si vor der Schürze im Endbereich des Querteils (6) ein aus einem abriebfesten, biegsamen, lappenartigen Element bestehender Verschleißschutz (14) befindet, der lösbar mit dem Steg (10) verbunden ist, dadurch gekennzeichnet, dass der Verschleißschutz (14) unabhängig vom Querteil (6) bzw. dessen Befestigungsmitteln am Steg (10) befestigt ist.

2. Dichtung nach Anspruch 1, dadurch gekennzeichnet, dass der Verschleißschutz (14) mit gringem Abstand vor dem Querteil (6) angeordnet ist.

3. Dichtung nach Anspruch 1, dadurch gekennzeichnet, dass der Verschleißschutz (14) lösbar mit einem Profilstreifen (17) verbunden ist, der sein-erseits auch lösbar an dem Querteil (6) und anabhängig vom Querteil (6) bzw. dessen Befestigungsmitteln angebracht ist.

4. Dichtung nach Anspruch 1, dadurch gekennzeichnet, dass der obere Rand der Verschleißschutzes (14) in einen Schlitz (16) eingreift, in dem der Rand durch in Löcher (17') eingesetzte Sperrkörper (18) gehalten ist, die in Erweiterungen (19) bzw. Hinterschneidungen des Schlitzes in der Weise eingreifen, dass der Rand (15) zusammen mit den Sperrkörpern aus dem Schlitz herausziehbar ist.

5. Dichtung nach Anspruch 4, dadurch gekennzeichnet, dass die Sperrkörper (18) Kugeln sind.

6. Dichtung nach Anspruch 3 und 4, dadurch gekennzeichnet, dass der Schlitz (16) unten im Profilstreifen (17) angeordnet ist.

7. Dichtung nach Anspruch 1, dadurch gekennzeichnet, dass der Verschleißschutz (14) ein einstückiger Lappen ist.

8. Dichtung nach Anspruch 3, dadurch gekennzeichnet, dass der Querschnitt des Profilstreifens (17) der Aussenkontur des Steges (10) angepasst ist.

## Claims

1. Deformable seal for sealing the gap between the edge of an opening (2) in a building and the rear of a vehicle which has been reversed up to said opening, having an apron which is secured, at its lateral ends and upper end, to a rigid frame, which is spaced from the building and is open at its lower end, the apron comprising an upper transverse member (6), which is mounted on the horizontal web (10) of the frame, and comprising two strips (5), which are mounted on the vertical legs of the frame by means of their laterally and externally situated edges, and wherein an arrangement (14) for protection against wear and tear, comprising a wear-resistant, flexible, tab-like element, is situated in front of the apron in the end region of the transverse member (6) and is detachably connected to the web (10), characterised in that the arrangement (14) for protection against wear and tear is secured to the web (10) independently of the transverse member (6), or respectively of its securing means.

2. Seal according to claim 1, characterised in that the arrangement (14) for protection against wear and tear is disposed a short distance from the transverse member (6).

3. Seal according to claim 1, characterised in that the arrangement (14) for protection against wear and tear is detachably connected to a profile strip (17) which, in turn, is also detachably mounted on the transverse member (6) and independently of the transverse member (6), or respectively of its securing means.

4. Seal according to claim 1, characterised in that the upper edge of the arrangement (14) for protection against wear and tear engages in a slot (16), in which the edge is held by locking means (18), which are inserted into holes (17') and engage in widened portions (19), or respectively in tapered portions, of the slot in such a manner that the edge (15), together with the locking means, is removable from the slot.

5. Seal according to claim 4, characterised in that the locking means (18) are balls.

6. Seal according to claims 3 and 4, characterised in that the slot (16) is provided in the lower end of the profile strip (17).

7. Seal according to claim 1, characterised in that the arrangement (14) for protection against wear and tear is a one-piece tab.

8. Seal according to claim 3, characterised in that the cross-section of the profile strip (17) is adapted to the external configuration of the web (10).

## Revendications

1. Dispositif déformable pour rendre étanche l'intervalle entre le bord d'une baie de bâtiment (2) et l'arrière d'un véhicule automobile qui en est rapproché, comprenant une jupe fixée latéralement et en haut, à un cadre rigide, ouvert vers le bas et se trouvant à distance du bâtiment, la jupe étant constituée d'une traverse (6) supérieure fixée à l'âme (10) horizontale du cadre, et de deux bandes (5) fixées par leurs bords latéraux situés à l'extérieur aux branches verticales du cadre, une protection contre l'usure (14), constituée d'un élément en forme de patte souple et résistant au frottement, se trouvant devant la jupe, dans la région d'extrémité de la traverse (6) et étant reliée de manière amovible à l'âme (10), caractérisé en ce que la protection contre l'usure (14) est fixée à l'âme (10), indépendamment de la traverse (6) et de ses moyens de fixation.

2. Dispositif suivant la revendication 1, caractérisé en ce que la protection contre l'usure (14) est disposée à faible distance de la traverse (6).

3. Dispositif suivant la revendication 1, caractérisé en ce que la protection contre l'usure (14) est reliée de manière amovible à une bande profilée (17) qui est montée, pour sa part, également amovible sur la traverse (6) et indépendamment de la traverse (6) et de ses moyens de fixation.

4. Dispositif suivant la revendication 1, caractérisé en ce que le bord supérieur de la protection contre l'usure (14) pénètre dans une fente (16) dans laquelle le bord est maintenu par des pièces de blocage (18) insérées dans des trous (17') et pénétrant dans des parties élargies (19) ou des contre-dépouilles de la fente, de manière que le bord (15) puisse être retiré de la fente en même temps que les pièces de blocage.

5. Dispositif suivant la revendication 4, caractérisé en ce que les pièces de blocage (18) sont des billes.

6. Dispositif suivant la revendication 3 ou 4, caractérisé en ce que la fente (16) est ménagée en-dessous dans la bande profilée (17).

7. Dispositif suivant la revendication 1, caractérisé en ce que la protection contre l'usure (14) est une patte d'une seule pièce.

8. Dispositif suivant la revendication 3, caractérisé en ce que la section transversale de la bande profilée (17) est adaptée au contour extérieur de l'âme (10).

Fig. 1

Fig. 2